# EUROPEAN PATENT APPLICATION

(11) **EP 4 015 752 A1**
(43) Date of publication of application: **22.06.2022**
(21) Application number: 20216026.3
(22) Date of filing: 21.12.2020
(51) Int. Cl.: E05F 3/12, F16K 17/38

(54) **DOOR ACTUATOR AND DOOR UNIT**

(71) Applicant: dormakaba Deutschland GmbH, 58256 Ennepetal (DE)
(72) Inventor: Leong, Man Yee, 651436 Singapore (SG); Tew, You Wei, 562308 Singapore (SG)
(74) Representative: Balder IP Law, S.L.

(57) **Abstract**

The present invention relates to a door actuator (1) for opening and/or closing a door. The door actuator (1) comprises a housing (2) further comprising an inner space (3) which houses a hydraulic actuating mechanism (4) for actuating the door and hydraulic fluid (5) of the hydraulic actuating mechanism (4). Therein, the housing (2) comprises at least one pressure relief aperture (6) sealed by a thermally and/or pressure activated valve mechanism (7) for opening the aperture (6). The valve mechanism (7) comprises a fixing member (8) and a barrier member (9) arranged between the fixing member (8) and the inner space (3) of the housing (2), wherein the fixing member (8) fixes the barrier member (9) in the aperture (6). The barrier member (9) is configured to deform and/or deteriorate and/or disintegrate under pressure of the hydraulic fluid (5) and/or temperature, thereby opening the valve mechanism (7).

## Description

The invention concerns a door actuator for opening and/or closing a door and a door unit comprising the door actuator.

Conventionally, door actuators are known which include hydraulic actuating mechanisms for actuating a door and hydraulic fluid for the hydraulic actuating mechanism. Typically, in case of a fire in a building, the door to which the door actuator is connected is heated by the fire, whereby the door actuator is also heated. Thereby, the pressure and temperature in the door actuator is greatly increased, thus increasing the risk that the hydraulic fluid combusts or is released onto the heated door and ignited thereby.

An object of the present invention is to provide a door actuator for opening and/or closing a door which can release the hydraulic fluid in a manner that can decrease the risk of combustion thereof.

This object is solved by the features of the independent claims. The dependent claims contain advantageous embodiments of the present invention.

A door actuator for opening and/or closing a door of the present invention comprises a housing, wherein the housing further comprises an inner space which houses a hydraulic actuating mechanism for actuating the door. Further, the inner space houses a hydraulic fluid of the hydraulic actuating mechanism. In addition, the housing comprises at least one pressure relief aperture leading into the inner space. The pressure relief aperture is sealed by a thermally and/or pressure activated valve mechanism for opening the aperture. Herein, the valve mechanism comprises a fixing member and a barrier member arranged between the inner space of the housing. The fixing member fixes the barrier member in the aperture. The barrier member prevents hydraulic fluid in the inner space from coming into contact with the fixing member. Further, the barrier member is configured to deform and/or deteriorate and/or disintegrate under pressure of the hydraulic fluid and/or temperature, thereby opening the valve mechanism. Therein, the heat is transferred from the housing and/or the hydraulic fluid to the barrier member.

The door actuator of the present invention has the advantage that the valve mechanism is opened via the deformation and/or deterioration and/or disintegration of the barrier member under pressure and/or temperature such that the hydraulic fluid of the hydraulic actuating mechanism can escape the inner space of the housing. Therefore, it is possible to reduce the temperature and pressure of the hydraulic fluid and thereby decrease the risk of combustion thereof.

Preferably, the fixing member of the valve mechanism is configured to deform and/or deteriorate and/or disintegrate upon deformation and/or deterioration and/or disintegration of the barrier member. In other words, the fixing member and the barrier member may deform and/or deteriorate and/or disintegrate under pressure of the hydraulic fluid and/or temperature. This has the advantage that a larger amount of hydraulic fluid or the same amount of hydraulic fluid in a shorter time can escape from the inner space of the housing through the pressure relief aperture of the door actuator.

Advantageously, the fixing member is configured to deform and/or deteriorate and/or disintegrate upon contact with the hydraulic fluid. Therein, hydraulic fluid comes into contact with the fixing member upon deformation and/or deterioration and/or disintegration of the barrier member, thereby deforming and/or deteriorating and/or disintegrating the fixing member. Preferably, the aforementioned deformation and/or deterioration and/or disintegration of the fixing member is caused by a chemical and/or temperature reaction of the material of the fixing member with the hydraulic fluid. The fixing member may especially be configured to be dissolvable in the hydraulic fluid. With this, it is possible to quickly and reliably release the hydraulic fluid from the inner space of the housing of the door actuator. A suitable combination of substances may be, that the hydraulic fluid contains a hydraulic oil, which typically is a non-polar solvent, and the fixing member comprises a non-polar substance like wax or a non-polar resin. Another suitable combination of substances may be that the hydraulic fluid contains a polar solvent, for example water, and the fixing member comprises a polar substance, for example a polar resin.

Further advantageously, the barrier member comprises a chamber portion filled with a substance, especially a reactive fluid. The state of matter of the substance can be gaseous, solid, liquid or any mixture thereof. The state of matter of the substance may change with the ambient temperature. The substance is released from the chamber portion upon deformation and/or deterioration and/or disintegration of the barrier member. Further, the fixing member is configured to deform and/or deteriorate and/or disintegrate upon contact with the substance. The fixing member is especially configured to dissolve upon contact with the substance stored in the barrier member. With this, it is possible to quickly and reliably release the hydraulic fluid from the inner space of the housing.

Preferably, the substance stored in the barrier member may at least partially comprise a gas, for example air. Therein, the generally higher pressure of the gas at the same temperature of the hydraulic fluid can advantageously increase the flow rate of the hydraulic fluid through the aperture, especially via a vacuum effect generated by the ejection of the gas from the aperture. Further, the gas can advantageously disperse the hydraulic fluid being ejected from the aperture. In addition, this can provide a cooling effect for the hydraulic fluid being ejected from the aperture of the housing.

Preferably, the substance comprises a polar or non-polar solvent that will cause the fixing member to deform and/or deteriorate and/or disintegrate upon contact with the substance.. Thereby, it is possible to provide a cost effective thermally and/or pressure activated valve mechanism for opening the aperture.

Further preferably, the barrier member comprises a plurality of chamber portions each filled with a reactant, especially a reactive fluid. Therein, the deformation and/or deterioration and/or disintegration of the barrier member causes the reactants of the respective chamber portions to react and form a product. The reaction of the multiple reactants may especially produce a gas. Thereby, the product may deform and/or deteriorate and/or disintegrate the fixing member. Alternatively or additionally thereto, the product can cause or promote an ejection of the fixing member from the pressure relief aperture. This has the advantage that the hydraulic fluid of the hydraulic actuating mechanism can be ejected from the inner space of the housing with an advantageously high flow rate.

Advantageously, the fixing member comprises a through-hole through which the hydraulic fluid can flow upon deformation and/or deterioration and/or disintegration of the barrier member. Thereby, the hydraulic fluid of the hydraulic actuating mechanism can be ejected with a high flow rate from the housing.

Preferably, the fixing member is configured to be pressure-resistant and temperature-resistant such that the fixing member does not substantially deform and/or deteriorate and/or disintegrate under pressure and/or temperature of the hydraulic fluid. Thereby, the fixing member can reliably fix the barrier member in the aperture while allowing for the hydraulic fluid to escape the housing through its through-hole upon deformation and/or deterioration and/or disintegration of the barrier member. This has the advantage that the hydraulic fluid can be easily and reliably ejected from the housing.

Further preferably, the housing of the door actuator comprises a mechanical stop in the aperture, wherein the barrier member is arranged between the fixing member and the mechanical stop of the housing. Preferably, the barrier member is clamped by the fixing member and the mechanical stop of the housing. Thereby, it is possible to provide a secure fit for the barrier member in the aperture of the housing.

Advantageously, the fixing member includes a thread that is threaded into an inner thread of the aperture such that the fixing member is fixed in the aperture. In other words, the fixing member may be screwed into the inner thread of the aperture. Thereby, it is possible to provide a secure fit and an advantageously good seal between the inner space of the housing and the outside of the housing via the fixing member.

Further advantageously, the fixing member is fixed to the aperture by crimping / deforming the top surface of the housing. Thereby, it provides a secure hold on the fixing member.

Preferably, the fixing member comprises a sealing ring in contact with an inner surface of the aperture. The sealing ring of the fixing member may especially be an O-ring. The sealing ring seals the aperture and prevents hydraulic oil from coming into contact with the fixing member. Herein, the sealing ring may also be configured to deform and/or deteriorate and/or disintegrate upon deformation and/or deterioration and/or disintegration of the barrier member. Thereby, an advantageously good seal may be provided between the inner space of the housing and an outside of the housing.

Further preferably, a sealant is applied between the fixing member and the inner surface of the aperture. The sealant provides a good seal between the inner space of the housing and outside of the housing. The sealant may be configured to deteriorate and/or disintegrate upon coming into contact with the hydraulic fluid after the deformation and/or deterioration and/or disintegration of the barrier member.

Advantageously, the inner space of the door actuator is the receiving space of a closing spring, wherein the at least one pressure relief aperture leads directly into this receiving space. The pressure relief aperture especially directly connects the receiving space of the closing spring with an outside of the door actuator. Thereby, hydraulic fluid, preferably in the receiving space, can be easily and efficiently ejected through the aperture.

In an advantageous embodiment, the housing of the door actuator comprises at least one pair of pressure relief apertures. Therein, depending on a mounted orientation of the door actuator, one pressure relief aperture of each of the at least one pairs is arranged on the bottom of the housing. The other of each of the at least one pairs of pressure relief apertures is arranged on the top of the housing. Therein, each of the pressure relief apertures is provided with the valve mechanism. This has the advantage that at least one pressure relief aperture is disposed on the bottom of the housing, irrespective of the orientation of the door actuator. Thereby, the hydraulic fluid of the hydraulic actuating mechanism can advantageously be ejected towards the ground, especially in case of a fire. In addition, the hydraulic fluid may also be ejected towards a ceiling, which can also provide cooling of the hydraulic fluid.

Preferably, the pressure relief aperture(s) and/or the through-hole(s) of the fixing member(s) may be configured to point away from the door. This has the advantage that the hydraulic fluid may be advantageously ejected from the housing, without substantially coming into contact with the door.

The present invention also concerns a door unit comprising a door and the door actuator according to any one of the foregoing advantageous examples. Therein, the hydraulic actuating mechanism is drivingly connected to the door or to a rod assembly connected to a door frame of the door such that an actuation of the actuating mechanism opens or closes the door.

This has the advantage that a door unit can be provided, wherein especially in the case of a fire it can be prevented that the hydraulic fluid is brought to combustion by heat from the door and/or the housing of the door actuator.

Further details, advantages, and features of preferred embodiments of the present invention are described in detail with reference to the figures. Therein,
- Fig. 1: shows a schematic cross section of a door actuator according to an embodiment of the present invention,
- Figs. 2a, 2b: show schematic cross sections of valve mechanisms of the door actuator according to the embodiment of the present invention,
- Figs. 3a, 3b: show schematic cross sections of valve mechanisms of the door actuator according to the embodiment of the present invention,
- Figs. 4a, 4b: show schematic cross sections of valve mechanisms of the door actuator according to the embodiment of the present invention, and
- Fig. 5: shows a schematic drawing of a door unit of the present invention.

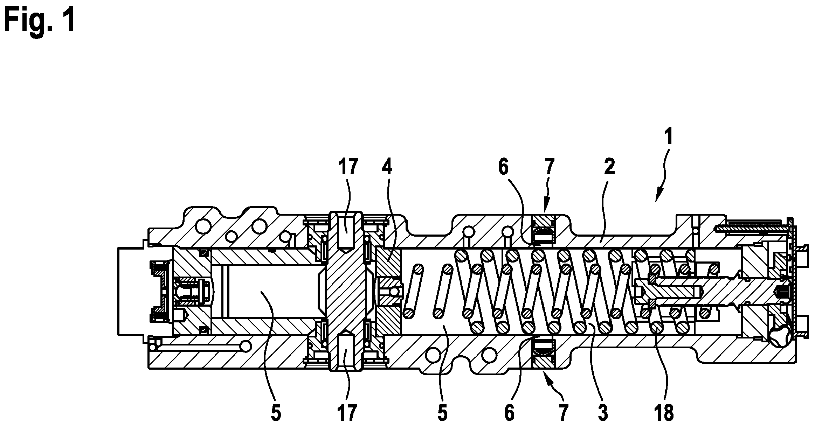

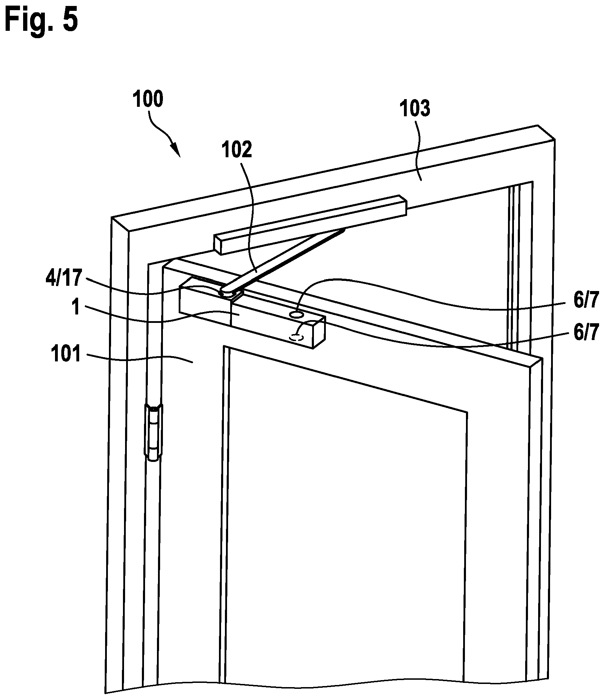

Figure 1 shows a schematic cross section of an embodiment of a door actuator 1 of the present invention. Herein, the door actuator 1 comprises a housing 2 enclosing an inner space 3 which houses a hydraulic actuating mechanism 4. The hydraulic actuating mechanism 4 actuates a door (see: Fig. 5). Further, the inner space 3 houses hydraulic fluid 5 of the hydraulic actuating mechanism 4. The inner space 3 is a receiving space for a closing spring 18, which provides the force with which the hydraulic actuating mechanism 4 actuates the door.

In the case of a fire, the door actuator 1 and thereby the hydraulic fluid 5 thereof may be heated to high temperatures.
Therefore, in order to alleviate this, the door actuator 1 according to the present invention comprises pressure relief apertures 6 for relieving pressure of the hydraulic fluid 5. The pressure relief apertures 6, in this example, directly connect the receiving space of the closing spring 18 with the outside of the door actuator 1. The pressure relief apertures 6 allow for the hydraulic fluid 5 to escape from the housing 2, especially the inner space 3, to the outside of the housing 2. In order to achieve this, the pressure relief apertures 6 are sealed by a thermally and/or pressure activated valve mechanism 7.

The thermally and/or pressure activated valve mechanisms 7 open the apertures 6 under certain temperatures and/or pressures of the housing 2 and/or the hydraulic fluid 5. In this example, the door actuator 1 is provided with two pressure relief apertures 6 and valve mechanisms 7, one of each on the top and on the bottom side of the housing 2, respectively. Thereby, the hydraulic fluid 5 may be ejected especially downwards, irrespective of the orientation with which the door actuator 1 is mounted. In addition, the hydraulic fluid 5 may also be ejected upwards through the top aperture 6. Thereby, the hydraulic fluid 5 can be ejected from the housing 2 of the door actuator 1 and advantageously be cooled thereby, thus lowering the risk of combustion thereof.

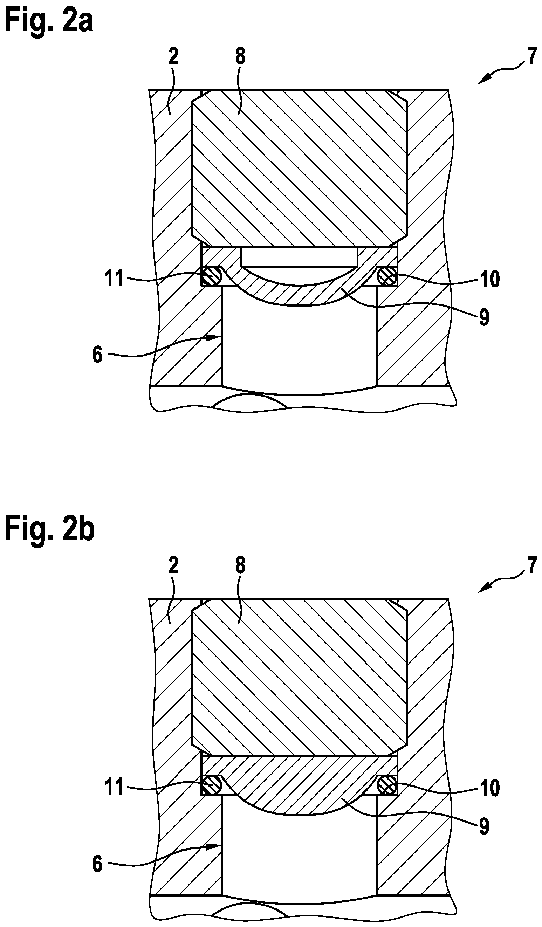

Figure 1 discloses the details of the door actuator 1 and the position of the apertures 6 for all following variants of the valve mechanism 7 shown in the figures 2a to 4b. The door actuator 1 may comprise a combination of the following variants of the valve mechanism 7.

Figures 2a and 2b show schematic cross sections of valve mechanisms 7 of the door actuator 1 according to the embodiment of the present invention.

Therein, the valve mechanism 7 comprises a fixing member 8 and a barrier member 9 disposed in the aperture 6 of the housing 2. The housing 2 further comprises a mechanical stop 10 in the aperture 6. The barrier member 9 is disposed between the fixing member 8 and the inner space 3 of the housing 2, especially between the fixing member 8 and the mechanical stop 10 of the housing 2. Thereby, the barrier member 9 is held in place by the fixing member 8.
Further, although not shown in the figures, the fixing member 8 may comprise a thread, or threaded portion, that is threaded into an inner thread of the aperture 6. Thereby, the fixing member 8 may be screwed into the aperture 6 of the housing 2. Alternatively, the fixing member 8 may be fixed to the aperture by crimping / deforming the top surface of the housing 2. Thereby, providing a secure hold on the fixing member in the aperture.

Further, the valve mechanism 7 comprises a sealing ring 11, especially an O-ring 11. Thereby, the inner space 3 of the housing 2 can advantageously be sealed more securely via the sealing ring 11. The sealing ring 11 prevents hydraulic oil from coming into contact with the fixing member 8.The barrier member 9 shown in figures 2a and 2b is configured to deform and/or deteriorate and/or disintegrate under pressure and/or temperature of the hydraulic fluid 5 in the housing 2. Due to being in close contact with the housing 2, heat and/or pressure may also be exerted from the housing 2 onto the barrier member 9. Therein, a thermal expansion of the housing 2 may exert pressure on the barrier member 9.

Specifically, the barrier member 9 of Fig. 2a is a pressure-sensitive or pressure-activated barrier member 9, and the barrier member 9 of Fig. 2b is a temperature-sensitive or temperature-activated barrier member 9. In both cases, the barrier member 9 is a thin membrane which separates the fixing member 8 from the hydraulic fluid 5. As temperature and pressure rise during a fire, this barrier member 9 deforms and/or breaks and/or degrades, allowing the hydraulic fluid 5 to come into contact with the fixing member 8.

As shown in Fig. 2a, the barrier member 9 (pressure-sensitive barrier member 9) may be configured to enclose a hollow space between a flat top portion and a rounded portion thereof. By adjusting the thickness of the barrier member 9 and/or the material thereof, the predetermined pressure under which said barrier member 9 deforms and/or breaks and/or degrades can be set. However, the pressure-sensitive barrier member 9 does not necessarily need to comprise a hollow space. Instead, depending on the predetermined pressure under which it deforms and/or breaks and/or degrades, the barrier member 9 may also be formed as a single solid element, as shown for instance in Fig. 2b with respect to the temperature-sensitive barrier member 9.

In addition, the thickness and/or material choice for the temperature-sensitive barrier member 9 may be set depending on a predetermined temperature under which said barrier member 9 deforms and/or breaks or degrades.

Once the housing 2 and/or the hydraulic fluid 5 reach the predetermined temperature and/or pressure, the barrier member 9 deforms and/or breaks and/or degrades, thus allowing the hydraulic fluid 5 to come into contact with the fixing member 8. The fixing member 8 is further configured to interact with the hydraulic fluid 5 such that the fixing member 8 disintegrates, especially dissolves, thereby creating an escape point for the hydraulic fluid 5. Therein, the hydraulic fluid 5 may especially be a hydraulic oil, and the fixing member 8 may at least partially comprise a material soluble in the hydraulic oil.

Therefore, when the temperature and pressure rise during a fire, the barrier member 9 deforms and/or deteriorates and/or disintegrates due to the interaction with the housing 2 and/or the hydraulic fluid 5, thereby bringing the hydraulic fluid 5 into contact with the fixing member 8, which is deteriorated and/or disintegrated, especially dissolved, by the hydraulic fluid 5. The hydraulic fluid 5 can then escape the housing 2 of the door actuator 1.

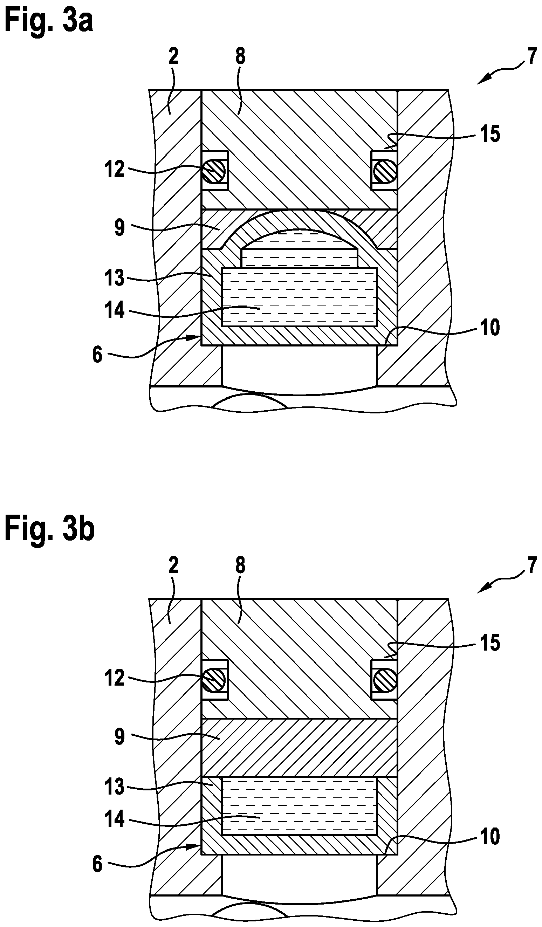

Figures 3a and 3b show schematic cross sections of further variants of the valve mechanism 7.

Herein, the pressure-sensitive barrier member 9 (Fig. 3a) and the temperature-sensitive barrier member 9 (Fig. 3b) comprise a chamber portion 13 that is filled with a substance 14. Upon deformation and/or deterioration and/or disintegration of the respective barrier members 9, the substance 14 in the chamber portion 13 is brought into contact with the fixing member 8.

The fixing member 8 will then deteriorate and/or disintegrate, especially dissolve, upon contact with the substance 14 of the chamber portion 13. This can, for instance, accelerate the process by which the fixing member 8 is deformed and/or deteriorated and/or disintegrated by the hydraulic fluid 5, which may be mixed with the substance 14 of the chamber portion 13.

Alternatively, the respective barrier members 9 may also include a plurality of chamber portions 13, wherein each of the chamber portions 13 is filled with a different reactant 14. Thereby, a chemical reaction between the respective reactants 14 of each of the multiple chamber portions 13 may be set forth by the deformation and/or deterioration and/or disintegration of the respective barrier member 9, especially the chamber portions 13 thereof. These chemical reactions can, for instance, result in a reactive fluid which can accelerate the deformation and/or deterioration and/or disintegration of the fixing member 8. Alternatively or additionally thereto, the reactants 14 of the chamber portions 13, or the reactants 14 generated by the aforementioned chemical reactions, can comprise a gas. Thereby, pressure from such a gas can be used to eject the fixing member 8 out of the aperture 6 of the housing 2.

Thereby, the amount or flow rate of hydraulic fluid 5 ejected from the door actuator 1 can be greatly increased. On the other hand, a predetermined choice of fluids 14 can be set depending on a desired flow rate of the hydraulic fluid 5. For instance, the fluids 14 may be chosen such that the fixing member 8 is merely partially deteriorated or deformed, such that the hydraulic fluid 5 is ejected from the inner space 3 with a lower flow rate.

Alternatively, providing a gas in the chamber 13, or one of the multiple chamber portions 13, of the barrier member 9 can advantageously increase the flow rate of hydraulic fluid 5 from the door actuator 1. For instance, when the gas in the chamber portion 13 is under pressure and is ejected from the aperture 6, this may cause a vacuum effect, thereby increasing the rate at which the hydraulic fluid 5 can be ejected from the aperture 6. In addition, an expansion of the gas after leaving the aperture 6 can also be employed to cool the hydraulic fluid 5 that is ejected together with the gas from the aperture 6 (commonly known as the "Joule-Thomson-Effect").

Further, as shown in figures 3a and 3b, the fixing member 8 may additionally comprise a sealing ring 12, herein especially an O-ring, that is in contact with an inner surface 15 of the aperture 6. Thereby, the seal of the valve mechanism 7 can be advantageously increased. Although not shown in the figures, a sealant may be used instead of a sealing ring 12 to provide a good seal between fixing member 8 and the inner surface 15 of the aperture 6.

Further, although not shown in the figures, the fixing member 8 may comprise a thread, or threaded portion, that is threaded into an inner thread of the aperture 6. Thereby, the fixing member 8 may be screwed into the aperture 6 of the housing 2. Alternatively, the fixing member 8 may be fixed to the aperture by crimping / deforming the top surface of the housing 2. Thereby, providing a secure hold on the fixing member in the aperture.

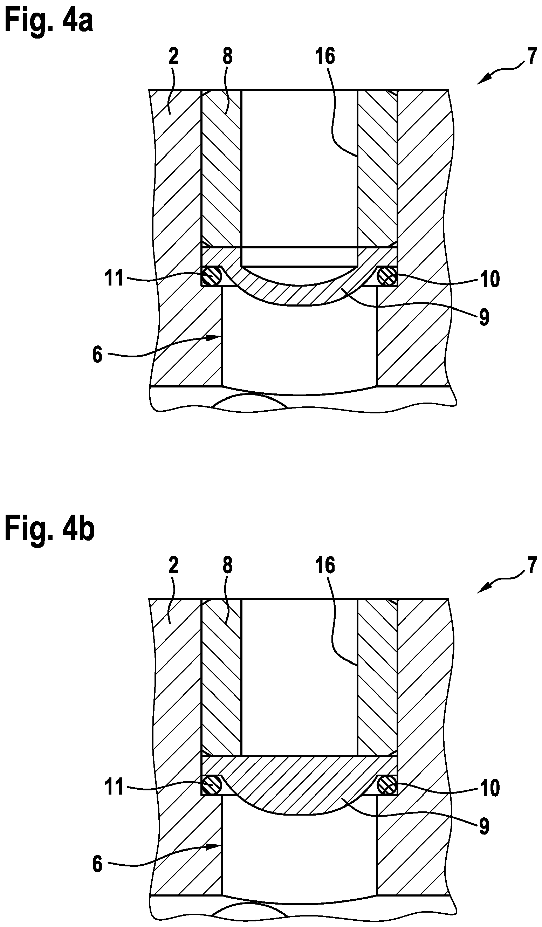

Figures 4a and 4b show schematic cross sections of further variants of the valve mechanism 7.

Therein, Fig. 4a, as also the case with figures 2a and 3a, shows a pressure-sensitive barrier member 9, whereas Fig. 4b, as also the case with figures 2b and 3b, shows a temperature-sensitive barrier member 9.

Further, the fixing member 8 of the present embodiment further includes a through-hole 16 through which the hydraulic fluid 5 can flow upon deformation and/or deterioration and/or disintegration of the barrier member 9. Herein, although the through-hole 16 is shown as being parallel with the aperture 6, the through-hole 16 may be formed so as to project in a predetermined direction differing from the aforementioned parallel direction. Thereby, the ejected hydraulic fluid 5 may be ejected, for instance, in a direction away from the door (see Fig. 5). Thereby, it is possible to advantageously prevent the hydraulic fluid 5 from being ejected to or against the door.

Thereby, the flow rate with which the hydraulic fluid is ejected from the aperture 6 can be successively increased by the deformation and/or deterioration and/or disintegration of the fixing member 8, for example by increasing the opening diameter of the through-hole 16.

In this embodiment, the fixing member 8 may be configured to deform and/or deteriorate and/or disintegrate upon contact with the hydraulic fluid 5.. Alternatively, however, the fixing member 8 can be configured to be pressure-resistant and temperature-resistant such that it does not substantially deform and/or deteriorate and/or disintegrate under pressure and/or temperature of the hydraulic fluid 5 and/or the housing 2.

Although not shown in the figures, in addition or alternatively to the fixing member 8 comprising the thread, by which the fixing member 8 is screwed into the aperture 6, the housing 2 may also be crimped or deformed in order to keep the fixing member 8 in place.

Fig. 5 shows a schematic drawing of a door unit 100 of the present invention.

The door unit 100 comprises a door 101 and a door actuator 1 according to the foregoing embodiments. Further, the hydraulic actuating mechanism 4 of the door actuator 1 is connected to the door 101 for opening and/or closing thereof. More specifically, a spindle 17 (see also Fig. 1) of the door actuator 1 is connected to a rod assembly 102 which is connected to a door frame 103 of the door unit 100. Therefore, a rotation of the spindle 17 opens or closes the door 101. The spindle 7 is actuated, more specifically rotated, by the actuating mechanism 4. The force with which the actuating mechanism 4 actuates the door 101 is generated by the closing spring 18. Further, as can be taken from Fig. 5, the door actuator 1 comprises two apertures 6 and valve mechanisms 7, one on the top and one on the bottom of the door actuator 1.

### List of Reference Numerals

- 1: door actuator
- 2: housing
- 3: inner space
- 4: hydraulic actuating mechanism
- 5: hydraulic fluid
- 6: aperture
- 7: valve mechanism
- 8: fixing member
- 9: barrier member
- 10: mechanical stop
- 11: O-ring
- 12: O-ring of the fixing member
- 13: chamber portion
- 14: fluid of the chamber portion / barrier member
- 15: inner surface of the aperture
- 16: through-hole of the fixing member
- 17: spindle
- 18: closing spring
- 100: door unit
- 101: door
- 102: rod assembly
- 103: doorframe

## Claims

1. A door actuator (1) for opening and/or closing a door, comprising:
• a housing (2) comprising an inner space (3) which houses a hydraulic actuating mechanism (4) for actuating the door and hydraulic fluid (5) of the hydraulic actuating mechanism (4), wherein
• the housing (2) comprises at least one pressure relief aperture (6) sealed by a thermally and/or pressure activated valve mechanism (7) for opening the aperture (6), wherein
• the valve mechanism (7) comprises a fixing member (8) and a barrier member (9) arranged between the fixing member (8) and the inner space (3) of the housing (2),
• the fixing member (8) fixes the barrier member (9) in the aperture (6), and
• the barrier member (9) is configured to deform and/or deteriorate and/or disintegrate under pressure of the hydraulic fluid (5) and/or temperature, thereby opening the valve mechanism (7).

2. Door actuator (1) according to claim 1, wherein the fixing member (8) is configured to deform and/or deteriorate and/or disintegrate upon deformation and/or deterioration and/or disintegration of the barrier member (9).

3. Door actuator (1) according to claim 2, wherein the fixing member (8) is configured to deform and/or deteriorate and/or disintegrate upon contact with the hydraulic fluid (5).

4. Door actuator (1) according to claim 2 or 3, wherein the barrier member (9) comprises a chamber portion (13) filled with a substance (14), especially a reactive fluid (14), which is released upon deformation and/or deterioration and/or disintegration of the barrier member (9), and wherein the fixing member (8) is configured to deform and/or deteriorate and/or disintegrate, especially dissolve, upon contact with the substance (14).

5. Door actuator (1) according to claim 2 or 3, wherein the barrier member (9) comprises a plurality of chamber portions (13) each filled with a reactant, especially a reactive fluid (14), which are released upon deformation and/or deterioration and/or disintegration of the barrier member (9), wherein the deformation and/or deterioration and/or disintegration of the barrier member (9) causes the reactants of the respective chamber portions (13) to react and form a product, wherein the product deforms and/or deteriorates and/or disintegrates the fixing member (8)

6. Door actuator (1) according to claim 4, wherein the substance (14) comprises a polar or non-polar solvent.

7. Door actuator (1) according to claim 1, wherein the fixing member (8) comprises a through-hole (16) through which the hydraulic fluid (5) can flow upon deformation and/or deterioration and/or disintegration of the barrier member (9).

8. Door actuator (1) according to claim 7, wherein the fixing member (8) is configured to be pressure-resistant and temperature-resistant such that the fixing member (8) does not substantially deform and/or deteriorate and/or disintegrate under pressure and/or temperature of the hydraulic fluid (5).

9. Door actuator (1) according to any of the foregoing claims, wherein the housing (2) comprises a mechanical stop (10) in the aperture (6) and wherein the barrier member (9) is arranged between, especially clamped by, the fixing member (8) and the mechanical stop (10) of the housing (2).

10. Door actuator (1) according to any of the foregoing claims, wherein the fixing member (8) includes a thread that is threaded into an inner thread of the aperture (6) such that the fixing member (8) is fixed in the aperture (6).

11. Door actuator (1) according to any of the foregoing claims, wherein the housing (2) is crimped or deformed after insertion of the fixing member (8) into the aperture (6) such that the fixing member (8) is fixed in the aperture (6).

12. Door actuator (1) according to any of the foregoing claims, wherein the fixing member (8) comprises a sealing ring (12), especially an O-ring (12), in contact with an inner surface (15) of the aperture (6).

13. Door actuator (1) according to any one of the foregoing claims, the inner space (3) being the receiving space of a closing spring (18) and the at least one pressure relief aperture (6) leading directly into this receiving space.

14. Door actuator (1) according to any one of the foregoing claims, wherein the housing (2) comprises at least one pair of pressure relief apertures (6), and wherein, depending on a mounted orientation of the door actuator (1), one pressure relief aperture (6) of each of the at least one pairs is arranged on the bottom of the housing (2) and the other of each of the at least one pairs is arranged on the top of the housing (2), especially wherein at least one of the pressure relief apertures (6) is arranged to point away from the door.

15. A door unit (100), comprising:
• a door (101); and
• the door actuator (1) according to any one of the foregoing claims, wherein the hydraulic actuating mechanism (4) is drivingly connected to the door (101) or to a rod assembly (102) connected to a door frame (103) of the door (101) such that an actuation of the actuating mechanism (4) opens or closes the door (101).
